Europäisches Patentamt

European Patent Office

Office européen des brevets

(19)

(11) Veröffentlichungsnummer: **0 113 468**
**B1**

(12) **EUROPÄISCHE PATENTSCHRIFT**

(45) Veröffentlichungstag der Patentschrift: **11.07.90**

(21) Anmeldenummer: **83112764.2**

(22) Anmeldetag: **19.12.83**

(51) Int. Cl.⁵: **G 02 B 17/08,** G 01 J 1/04,
G 08 B 13/18

(54) Optisches Bauelement zum Umlenken optischer Strahlen.

(30) Priorität: **05.01.83 CH 43/83**
**21.10.83 CH 5727/83**

(43) Veröffentlichungstag der Anmeldung:
**18.07.84 Patentblatt 84/29**

(45) Bekanntmachung des Hinweises auf die
Patenterteilung:
**11.07.90 Patentblatt 90/28**

(84) Benannte Vertragsstaaten:
**AT BE CH DE FR GB IT LI LU NL SE**

(56) Entgegenhaltungen:
**EP-A-0 014 825**
**DE-A-2 537 380**
**DE-A-2 645 040**
**DE-A-2 653 111**
**DE-A-3 039 819**
**US-A-3 958 118**
**US-A-3 976 875**
**US-A-3 988 726**
**US-A-4 322 124**

(73) Patentinhaber: **Züblin, Marcel Dipl.-Ing. ETH**
**Tachlisbrunnenstr. 28**
**CH-8400 Winterthur (CH)**

(72) Erfinder: **Züblin, Marcel Dipl.-Ing. ETH**
**Tachlisbrunnenstr. 28**
**CH-8400 Winterthur (CH)**

(74) Vertreter: **Troesch, Hans Alfred, Dr. Ing. et al**
**Walchestrasse 19**
**CH-8035 Zürich (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 113 468 B1

## Beschreibung

Die vorliegende Erfindung betrifft ein optisches Bauelement zur Umlenkung optischer Strahlen auf ein Sensorflächenelement in einer Ebene, bei dem um das Flächenelement eine bezüglich seiner Normalen symmetrische Anordnung geneigt aufragender Spiegel vorgesehen ist deren obere Berandung eine Eintrittsöffnung für die Strahlen bildet, durch die einfallende Strahlen nach Einfachreflexion an der Spiegelanordnung in einem Winkel zur Normalen auf das der Eintriffsöffnung zugekehrte Flächenelement auftreffen, der kleiner ist als ihr diesbezüglicher Winkel beim Eindringen in die Eintrittsöffnung.

Es ist bekannt, dass optoelektrische Wandler, wie beispielsweise Passivinfrarotsensoren, eine relativ schmale Empfangs-Charakteristik aufweisen. Die keulenartig um die Zentrumsachse eines derartigen Elementes raumsymmetrisch gedachte Empfangs-Charakteristik weist ein Sensibilitätsmaximum im Zentrum auf, wobei diese Sensibilität des Elementes mit zunehmendem Winkel mit Bezug auf die Zentrumsachse erst langsam und dann ab einem Oeffnungswinkel von ca. 45° rasch abnimmt. Nun besteht beim Einsatz optischer Detektoren, wie derartiger Infrarotdetektoren, beispielsweise für die Ansteuerung von Beleuchtungen, sie dies in Sicherheitsanlagen oder für die Beleuchtung in Gebäuden, das Bedürfnis, die Infrarotstrahlung von Infrarotquellen, wie von Lebewesen, weitwinklig zu detektieren, womit mit Vorsehen eines einzigen Sensors bereits ein grosser Raumwinkel überwacht werden könnte. Würde z.B. ein derartiger Infrarotsensor an einer Wand montiert, um die Beleuchtungsanlage eines Raumes, wie eines Hausflurs, einzuschalten, sobald jemand den Raum betritt und ohne dass sich diese Person im Dunkeln erst zu einem herkömmlichen Lichtschalter durchtasten muss, so ist dies insbesondere dann sinnvoll, wenn der durch einen solchen Sensor erfasste Winkel um die Sensor-Zentrumsachse normal zur Wand möglichst gross ist, d.h. bis hin zu 90° oder gar mehr. Diese Forderung steht im Widerspruch mit oben genannter Tatsache, dass derartige vorzusehende Sensoren eine relativ schmale Empfangs-Charakteristik aufweisen. Nebst der genannten Ein/Abschalt-Steuerung besteht auch ein Bedürfnis, derartige Sensoren, beispielsweise in Räumen, vorzusehen, um deren Beleuchtung so lange angeschaltet zu halten, als sich eine Person im Raum befindet. Auch dies erfordert eine weitwinklige Erfassung der optischen Strahlen und auch hier ist erkenntlich, dass das Bedürfnis besteht, mit einem einzigen Sensor einen möglichst grossen Raum zu überwachen. Unter Berücksichtigung dieser sich widersprechenden Erfordernisse sind Verfahren eingangs genannter Art bekannt geworden, bei welchen mittels Rohlspiegeln und Mehrfachreflexion die weitwinklig zu detektierende Einfallstrahlung in den Empfangsbereich erhöhter Sensibilität eines optoelektrischen Wandlers umgelenkt wird. Einerseits ergibt sich durch die Mehrfachreflexion jedoch ein erhöhter Energieverlust der zu detektierenden Strahlung, anderseits ist die Anordnung von Hohlspiegeln und die Realisation von Mehrfachreflexionen aufwendig. Zudem lassen sich trotzdem Strahlen, die unter nahezu 90° bezüglich der Sensor-Zentrumsachse einfallen, dadurch nicht so umlenken, dass sie in den Bereich erhöhter Sensibilität des Sensors, spitzwinklig zu seiner Haupt-Empfangsachse, einfallen. Gerade die weitwinklig einfallenden Strahlen sollten in einen möglichst grosse Sensibilität gewährleistenden Winkel und ohne Verluste auf den Sensor einfallen, denn aus dieser Sensibilität ergibt sich, beispielsweise wenn ein derartiger Sensor an der Decke eines Raumes angeordnet ist, die maximale Detektionsdistanz, die auch ausgenützt wird und die möglichst grösser sein sollte als die Raumhöhe.

Aus der US—A—3 958 118 ist ein optisches Bauelement zur Umlenkung optischer Strahlen auf ein Sensorflächenelement bekannt, bei dem, um das Flächenelement, eine bezüglich einer Normalen auf das Flächenelement symmetrische Anordnung büchsenartig geschlossen und geneigt aufragender Spiegel vorgesehen ist. Die büchsenartig aufragende Spiegelanordnung definiert eine geschlossen berandete Eintrittsöffnung für die Strahlen. Weitwinklig in die genannte Oeffnung eintretende Strahlen werden dabei entweder an der spiegelnden Büchseninnenwandung mehrfach reflektiert, um dann schliesslich auf das Sensorflächenelement geworfen zu werden, oder werden an Brechungslinsen, welche über der genannten Oeffnung angeordnet sind, erst so gebrochen, dass sie unter einem bezüglich der genannten Normalen steileren Winkel in die Büchse eintreten und nun, wegen des durch Wirkung der Linsen steileren Winkels, durch Einfachreflexion an der spiegelnden Büchseninnenwand auf das Sensorflächenelement geworfen werden.

Die weitwinklig eintreffenden Strahlen treffen in einem bezüglich der erwähnten Normalen kleineren Winkel auf das Flächenelement auf, als sie in die erwähnte Oeffnung eindringen.

Nachteilig an diesem bekannten optischen Bauelement ist, dass weitwinklig eintreffende Strahlen in jedem Fall erst durch Mehrfachreflexion bzw. Reflexion und Brechung auf das Sensorelement geworfen werden, einhergehend mit entsprechenden Verlusten, die sich auf die Detektionsdistanz auswirken.

Die vorliegende Erfindung bezweckt, ausgehend von einem optischen Bauelement der genannten Art, ein Bauelement zu schaffen, mit dessen Hilfe bezüglich einer Zentrumsachse sehr weitwinklig eintreffende Strahlen in den Winkelbereich erhöhter Sensibilität eines vorzusehenden Wandlers umgelenkt werden können, also möglichst spitzwinklig zur Zentrumsachse bzw. zur Flächennormalen eines vorzusehenden Wandlers mit minimalen Verlusten.

Dies wird bei Ausbildung des optischen Bauelementes nach dem Wortlaut von Anspruch 1 erreicht.

Dabei ergibt sich ein äusserst einfacher Aufbau nach Anspruch 2.

Diese Ausführungsform eignet sich vornehmlich zur Ueberwachung der Strahlung aus spezifischen Raumrichtungen.

Bezüglich der beiden Halbräume aus denen die optischen Strahlen eintreffen werden symmetrische Verhältnisse nach Anspruch 3 geschaffen.

Werden die einfallenden Strahlen nicht von an sich bereits bündelnden Strahlensendern gebildet, sondern fallen sie diffus ein, so wird vorgeschlagen, das Bauelement nach Anspruch 4 auszubilden.

Die Linsen werden dabei vorzugsweise gemäß Anspruch 5 angeordnet.

Rechtwinklig oder gar im Sinne von windschief/ stumpfwinklig dann, wenn die zu überwachenden Raumrichtungen mit Bezug auf die Normale 90° oder gar grössere Winkel einschliessen.

Da die Strahlen aus dem einen Halbraum erst den ihnen nicht zugeordneten, wenigstens teilweise im nämlichen Halbraum angeordneten der versetzten Spiegel passieren müssen, bevor sie auf den ihnen zugeordneten Spiegel auftreffen und umgekehrt, ist es sehr wohl möglich, dass die vorgesehenen Spiegel unerwünschterweise einen Teil der ihnen nicht zugeordneten Strahlen oder des ihren nicht zugeordneten Strahlenkegels abdecken.

Um dies zu verhindern, wird vorgeschlagen, nach Anspruch 7 vorzugehen.

Im ersterwähnten Fall wird ein Spiegel in einem Halbraum, der mit seiner Fläche in das Bündel eingreift, welche letzteres auf den versetzten Spiegel im anderen Halbraum gerichtet ist, entsprechend der so gebildeten Schnittkurve ausgeschnitten und deckt somit vom besagten Strahlenkegel nichts mehr ab.

Anderseits können auch die Spiegel nur gerade so gross gewählt werden, wie dies die ihnen zugeordneten Strahlenkegel resp, deren Schnittfiguren mit den Spiegelebenen erfordern.

Durch Vorgehen nach Anspruch 8 wird auch die der Normalen entsprechende Richtung überwacht, wobei das durch diese weitere Sammellinse gebildete Bündel reflexionsfrei, d.h. zwischen den vorgesehenen Spiegeln hindurch auf das Sensorflächenelement fällt.

Die Spiegel werden vorzugsweise gemäss Anspruch 9 und gegebenenfalls nach Anspruch 10 ausgebildet. Der Halter sorgt dabei grundsätzlich für die exakte geometrische Spiegelpositionierung.

Dieser Halter wird dabei bevorzugterweise gemäss Anspruch 11 ausgebildet, so dass die exakte geometrische Zuordnung von Wandler-Empfangs-Charaktieristik und Spiegel sichergestellt ist.

Durch Vorgehen nach Anspruch 12 oder 13 wird eine einfache geometrische Zuordnung von Linsen/Spiegel/optoelektrischem Wandler erreicht.

Wird nun bezweckt, nicht mehr spezifisch einzelne Raumrichtungen zu überwachen, so wird vorgeschlagen, nach Anspruch 14 vorzugehen.

In Anbestracht, dass die Strahlenreflexion möglichst gegen einen Punkt des Flächenbereiches, nämlich den Normalen-Fusspunkt hin erfolgen soll, wird vorgeschlagen gemäss Anspruch 15 vorzugehen.

Dasselbe gilt selbstverständlich wenn bereits gebündelte Strahlen zu detektieren sind und somit dann keine Bündelung mittels Sammellinsen vorgenommen werden muss.

Eine relativ einfache und exakte Zuordnung von Spiegelflächen und Bündel-Hauptachsen resp. Strahlenbündel-Einfallsrichtung wird gemäss Anspruch 17 erreicht.

Zum Reflektieren der weitwinklig einfallenden Strahlen, spitzwinklig bezüglich der Flächennormalen gegen deren Fusspunkt hin, wird vorzugsweise nach Anspruch 18 vorgegangen.

Das vorgeschlagene Bauelement eignet sich vorzüglich im Zusammenhang mit einem Passiv-Infrarotdetektor.

In dieser Verwendung wird damit z.B ein Raumbeleuchtungs-Steuermodul realisiert, welches, solange eine Person in einem relativ grossen Raumbereich eines Raumes ist, die Beleuchtung aktiviert hält und wenn die Person den Raum verlässt, abschaltet.

Grundsätzlich eignet sich das vorgeschlagene Bauelement zur Weitwinkelvergrösserung einer relativ schmalwinkligen Empfangs-Charakteristik eines vorgesehenen optoelektrischen Wandlers bis zu mindestens ±90° bezüglich der Empfangs-Charakteristik-Zentralachse des optoelektrischen Wandlers.

Die Erfindung wird anschliessend beispielsweise anhand von Figuren erläutert.

Es zeigen:

Fig. 1a eine Aufsicht auf eine prinzipielle erfindungsgemässe Spiegelanordnung,

Fig. 1b eine Seitenansicht der Anordnung gemäss Fig. 1a,

Fig. 2a eine Aufsicht auf eine Anordnung gemäss Fig. 1a mit je den Spiegeln zugeordneten Sammellinsen, für diffus einfallende, erfindungsgemäss umzulenkende Strahlung,

Fig. 2b eine Seitenansicht der Anordnung gemäss Fig. 2a,

Fig. 3a einen Spiegelhalter mit erfindungsgemäss angeordneten Spiegeln zur Umlenkung von Strahlen, vornehmlich aus zwei Raumrichtungen,

Fig. 3b eine Aufsicht auf die Anordnung gemäss Fig. 3a,

Fig. 4a eine Aufsicht auf eine bevorzugte Anordnung mit Linsen und Spiegelhalter zur erfindungsgemässen Umlenkung optischer Strahlen, vornehmlich aus drei Raumrichtungen einfallend,

Fig. 4b einen teilweisen Längsschnitt durch die Anordnung gemäss Fig. 4a,

Fig. 5a eine Aufsicht auf eine erfindungsgemässe Anordnung zur Umlenkung einfallender Strahlen, nicht richtungsspezifisch,

Fig. 5b eine teilweise Seitenansicht der Anordnung gemäss Fig. 5a,

Fig. 6a eine Aufsicht auf ein weiteres erfindungsgemässes optisches Bauelement,

Fig. 6b eine Seitenansicht der Anordnung gemäss Fig. 6a,

Fig. 7 die Empfangs-Charakteristik eines Infrarotsensors mit den Auswirkungen eines vorgesehenen, als Weitwinkel-Sammeloptik wirkenden, erfindungsgemässen optischen Bauelementes, wie nach Fig. 6.

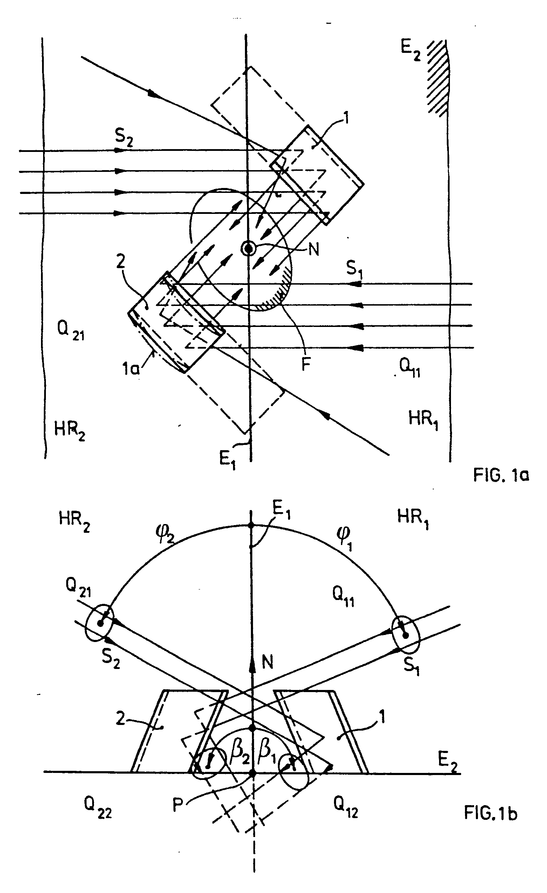

Gemäss Fig. 1a, 1b wird durch eine erste Ebene $E_1$ der Raum in zwei Halbräume $HR_1$ und $HR_2$ geteilt. Eine zweite Ebene $E_2$ unterteilt die Halb-räume $HR_1$ resp. $HR_2$ in Raumquadranten $Q_{11}$ bis $Q_{22}$. In der ersten Ebene $E_1$ sie eine Flächennor-male N der Ebene $E_2$ festgelegt. Strahlen $S_1$ resp. $S_2$ aus den Halbräumen $HR_1$ resp. $HR_2$, die insbe-sondere gemäss Fig. 1b unter relativ grossem Winkel $\varphi_1$ resp. $\varphi_2$ mit Bezug auf die Flächennormale N eintreffen, sollen so umgelenkt werden, dass sie mit kleinerem Winkel $\beta_1$ resp. $\beta_2$ bezüg-lich besagter Flächennormalen N auf einen Flächenbereich F in der zweiten Ebene $E_2$ auftreffen. Dazu werden die Strahlen $S_1$ aus dem einen Halbraum $HR_1$ resp. $S_2$ aus $HR_2$ durch Einfachre-flexion an Spiegeln 1 resp. 2 auf die zweite Ebene $E_2$ zurückgeworfen und zwar in den Flächenbe-reich F der Ebene $E_2$ um den Fusspunkt P der Flächennormalen N. Hierzu ist derjenige Spiegel 2, der für die Reflexion der Strahlen $S_1$ aus dem Halbraum $HR_1$ vorgesehen ist, grundsätzlich min-destens teilweise im Halbraum $HR_2$ angeordnet, derjenige, 1, für die Strahlen $S_2$ aus dem Halb-raum $HR_2$, im Halbraum $HR_1$. Bei bereits speziel-ler, jedoch in den meisten Fällen angezeiger Anordnung der Spiegelelemente 1, 2 auf einer Positionierungsebene wird dabei vorzugsweise die zweite Ebene $E_2$ als Positionierungsebene verwendet. Wie gestrichelt angedeutet, in Fig. 1a, können sich die Spiegelelemente 1, 2 mindestens teilweise auch in den anderen Halbraum erstrekken, d.h. Spiegelelement 1 in den Halbraum $HR_2$ und Spiegelelement 2 in den Halbraum $HR_1$. Sie sind beide so angeordnet, dass die Flächennormale N mit dem Flächenbereich F um ihren Fusspunkt P, auf welchen die Strahlen zu reflektie-ren sind, dazwischen liegt, vorzugsweise achsialsymmetrisch zur Normalen N. Obwohl auch eine derart symmetrische Anordnung der Spiegelelemente 1 und 2 in den meisten Fällen angezeigt sein wird, versteht es sich von selbst, dass Abweichungen davon durchaus möglich sind, solange eine Zurückspiegelung der eintreffenden Strahlen auf das Flächenelement F erfolgt. Die Ausrichtungen der Spiegelelemente 1 und 2 in der Ebene $E_2$, wie ihre Neigungen gegen die Flächennormale N hin, bestimmen sich nach der Einfallsrichtung der auszuwertenden Strahlen $S_1$ und $S_2$, der Lage und der erwünschten Ausdehnung des Flächenelementes F sowie nach den Gesetzen der Optik.

Obwohl in Fig. 1a und 1b die Spiegel 1 und 2 als plane Spiegel dargestellt sind, ist es durchaus möglich, wie bei 1a strichpunktiert angedeutet; Hohlspiegelsegmente einzusetzen.

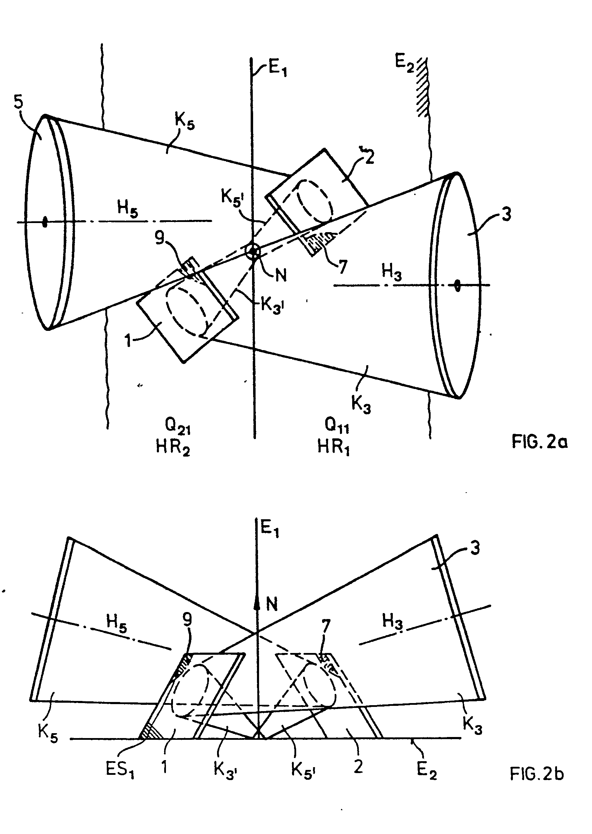

Gemäss den Fig. 2a und 2b ist, dem Spiegel 1 im Quadranten $Q_{11}$ eine Sammellinse 3 zugeord-net, dem Spiegel 2 eine Sammellinse 5 im Qua-dranten $Q_{21}$. Die optischen Hauptachsen $H_3$ der Linse 3, $H_5$ der Linse 5, sind bezüglich der Normalen N windschief und weisen vorzugsweise und wie in den Fig. dargestellt, parallele Projektionen auf die Ebene $E_2$ auf, vorzugsweise symmetrisch zur Normalen N. Der Strahlenkegel $K_3$ der Linse 3 wird am Spiegel 1 zum Kegel $K_{3'}$ gegen den Durchstosspunkt der Normalen N durch die Ebene $E_2$ hin reflektiert und analog der Kegel $K_5$ am Spiegel 2 als reflektierter Kegel $K_{5'}$. Wie aus diesen Fig. ersichtlich, ist es durchaus möglich, dass unter gewissen Winkelverhältnissen der Strahlenkegel, die jeweils einem betrachteten Kegel $K_3$ oder $K_5$ nicht zugeordneten Spiegel 2 resp. 1 einen Teil des Kegels abdecken. Dies sei beispielsweise für den Kegel $K_3$ im Bereich 7 der Fall, für den Kegel $K_5$ im Bereich 9. Ist dies der Fall, so werden die Spiegel 1 resp. 2 mindestens angenähert entsprechend den Schnittkurven zwischen ihren Flächen, in Fig. 2b bei Spiegel 1 mit $ES_1$ angedeutet, mit dem jeweils nicht zuge-ordneten Strahlenkegel, hier $K_5$, wie insbeson-dere beim Bereich 9 schraffiert dargestellt, ausgeschnitten. Dies vor allem in dem Masse als dadurch keine Beeinträchtigung des Strahlenganges bei der Reflexion des zugeordneten Bündels, hier $K_3$ und $K_{3'}$, geschieht. In Ergänzung oder austelle dieser Massnahme wird jeder der Spiegel nur gerade so gross ausgelegt, dass seine Fläche die ganze Schnittfigur mit dem ihm zugeordneten Bündel abdeckt, also der Spiegel 2 die Figur von $K_5$ und $K_{5'}$ und der Spiegel 1 diejenige vom Kegel $K_3$ resp. $K_3'$.

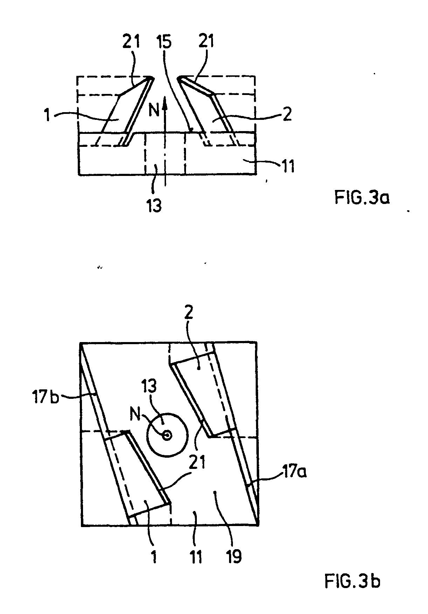

In Fig. 3 ist eine erste Realisation der Spiegelanordnung mit Halter 11 dargestellt. Der Halter 11 weist eine zentrale Aufnahmeöffnung 13 für einen Sensor oder Sender auf, wie für einen optoelektrischen Wandler. An der die Ebene $E_2$ gemäss den Fig. 1 und 2 festlegenden Oberseite 15 des Halters 11 sind Führungs- und Halterinnen 17a, 17b schief eingearbeitet, welche die Positionierung der Spiegel 1 resp. 2 ermöglichen, unter Einhaltung gewünschter Neigungswinkel mit Bezug auf die Normale N.

Der Halter 11, in dessen Rinnen 17a, 17b die Spiegel 1 resp. 2 eingeschoben sind, besteht vorzugsweise aus Kunststoff. Es ist jedoch ohne weiteres möglich, wie gestrichelt dargestellt, Spiegel und Halter 11 einteilig auszubilden, wobei dann vorzugsweise die Spiegelflächen nicht als aufragende plattenförmige Partien ausgebildet werden, sondern durch entsprechende Einarbeitung der Mittelpartie 19 mit der Aufnahmeöffnung 13 für einen Sensor. Wird der ganze Teil durch Metallbeschichtung verspiegelt, so kann die Metallschicht gleichzeitig als elektrischer Schirm verwendet werden.

Wie aus den Fig. 3a und 3b ebenfalls ersichtlich, sind die Oberkanten 21 der Spiegel 1 resp. 2 jeweils gegen den anderen Spiegel 2 resp. 1 hin geneigt, was der Einformung, beispielsweise 9 gemäss Fig. 2b entspricht, zur Reduktion des Anteils, der vom jeweiligen Spiegel am dem anderen Spiegel zugeordneten Negel abgedeckt wird.

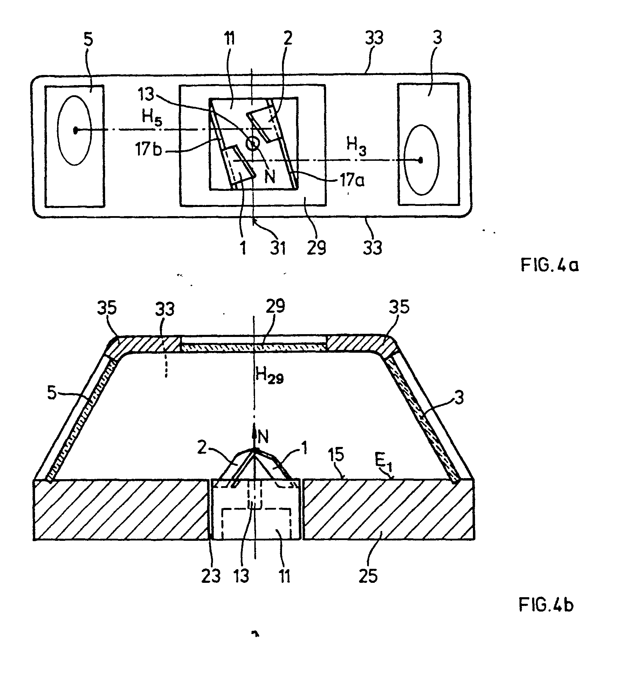

Gemäss den Fig. 4a und 4b ist der Spiegelhalter 11 in einer Führungs- und Positionierungsöffnung 23 in der Grundplatte 25 eines Linsenhalters 27 einfügbar. Nebst den zwei seitlichen Linsen gemäss Fig. 2 mit 3 und 5 bezeichnet, ist eine zentrale dritte Linse 29 vorgesehen. Ihre Hauptachse $H_{29}$ deckt sich mit der Normalen N, der die Ebene $E_1$ gemäss den Fig. 1 und 2 definierenden Oberseite 15 des Halteelementes 11 resp. der Grundplatte 25.

Da nämlich die beiden Spiegel 1 und 2 in Richtung der Normalen N betrachtet, einen zentralen Zwischenraum zwischen sich frei lassen, ist es möglich, mit der dritten Linse 29 eine weitere bezorzugte Raumrichtung zu überwachen. Die Linsen 5, 29 und 3 sind rechteckförmig ausgebildet, wobei, wie in Fig. 4a ersichtlich, die Hauptachsen $H_5$ und $H_3$ der Linsen 5 und 3 bezüglich der Flächennormalen N resp. der Aufnahmeöffnung 13 für einen Sensor symmetrisch verschoben sind. In der Ebene von Fig. 4b spannen die drei Linsen, vorzugsweise symmetrisch, einen Halbkreis auf, so dass durch diese Anordnung ein halbzylinderförmiger Aufbau um die Achse 31 gemäss Fig. 4a realisiert wird. Die Linsen sind beidseitig durch radial ausgerichtete Wandpartien 33 und Verbindungsstege 35 fixiert.

Der Linsenträger 25 wie auch der Spiegelträger 11 werden vorzugsweise aus Kunststoff gefertigt und es werden vorzugsweise auch Kunststofflinsen 5, 29 und 3 eingesetzt. Mit dem beschriebenen Verfahren und der bis anhin dargestellten Anordnung lässt sich eine höchst kompakte, im Aufbau einfache Optik realisieren, mit deren Hilfe vornehmlich drei Raumachsen, wenigstens nahezu in einer Ebene liegend, und die zwischen sich einen Winkel bis nahezu 180°, allenfalls mehr, einschliessen, überwacht werden können, indem die aus diesen Richtungen flach einfallenden Strahlen steil auf einen Bereich reflektiert werden, in welchen ein Sensor eingefügt werden kann, so dass dessen hohe Sensibilität um seine Empfangs-Charakteristik-Hauptachse ausgenützt wird.

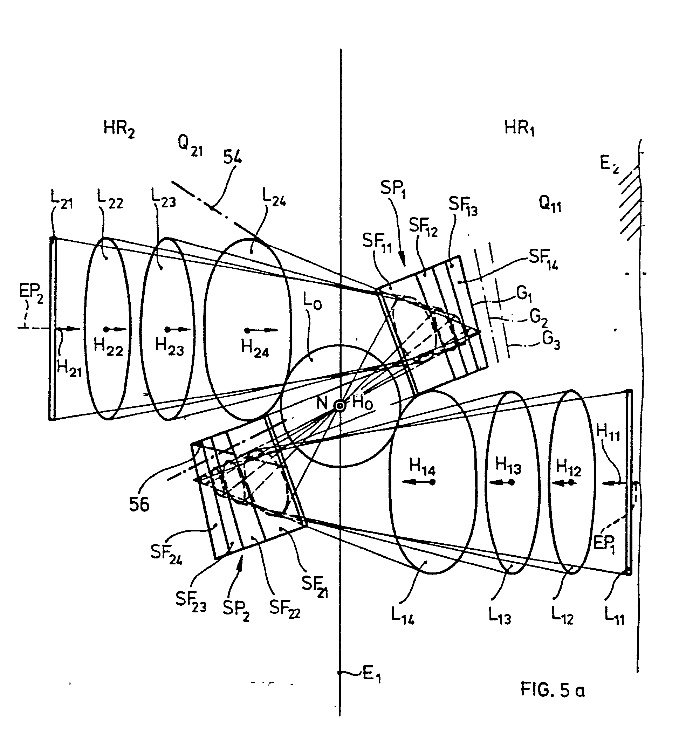

In Fig. 5a ist eine Darstellung analog zu Fig. 1a gezeigt, einer weiteren erfindungsgemässen Anordnung, unter grundsätzlicher Verwendung der anhand von Fig. 1a und 1b gezeigten Spiegelanordnung. Wiederum unterteilt die erste Ebene $E_1$ den Raum in Halbräume $HR_1$ und $HR_2$. Weiter unterteilt die zweite Ebene $E_2$, senkrecht zur ersten $E_1$, die Halbräume $HR_1$, $HR_2$ in Quadranten $Q_{11}$, $Q_{12}$ resp. $Q_{21}$, $Q_{22}$. Die Flächennormale N der zweiten Ebene $E_2$ liegt in der Ebene $E_1$. In jedem der Halbräume $HR_1$ resp. $HR_2$, insbesondere in denjenigen Quadranten $Q_{21}$, $Q_{11}$ auf einer Seite der zweiten Ebene $E_2$, sind je Sammellinsen vorgesehen, im einen Halbraum $HR_1$, beispielsweise vier Linsen $L_{11}$ bis $L_{14}$, im anderen Halbraum $HR_2$, beispielsweise ebenfalls vier Linsen $L_{21}$ bis $L_{24}$. Die Hauptaschen $H_{11}$ bis $H_{14}$ der Linsen $L_{11}$ bis $L_{14}$ im einen Halbraum, sind in einer zur Ebene $E_2$ senkrechten Projektionsebene $EP_1$ angeordnet, wie bespielsweise dargestellt, senkrecht auch auf der ersten Ebene $E_1$ steht. Desgleichen sind die Hauptachsen $H_{21}$ bis $H_{24}$ der Linsen $L_{21}$ bis $L_{24}$ im Halbraum $HR_2$ in einer Projektionsebene $EP_2$ angeordnet, ebenfalls senkrecht zur Ebene $E_1$. Dabei versteht es sich von selbst, dass die gezeigten bevorzugten speziellen Anordnungsverhältnisse der Linsen $L_{11}$ bis $L_{14}$ resp. $L_{21}$ bis $L_{24}$ nicht zwingend sind.

In Analogie zu Fig. 1a und 1b ist nun, zur Einfachreflexion der im Halbraum $HR_2$ durch die Linsen $L_{21}$ bis $L_{24}$ gebündelten Strahlen im Halbraum $HR_1$ auf der zweiten Ebene $E_2$ ein erstes Spiegelelement $SP_1$ vorgesehen, und entsprechend im Halbraum $HR_2$ ein Spiegelelement $SP_2$ zur Reflexion der aus dem ersten Halbraum $HR_1$ eintreffenden und durch die Linsen $L_{11}$ bis $L_{14}$ gebündelten Strahlen.

Jedes der Spiegelelemente $SP_1$, $SP_2$ ist gegen die Flächennormale N hin konkav gebogen oder geknickt, indem jedes Spiegelement $SP_1$, $SP_2$ plane Spiegelflächen $SF_{11}$ bis $SF_{14}$ entsprechend den Linsen $L_{21}$ bis $L_{24}$ zugeordnet, resp. $SF_{21}$ bis $SF_{24}$, entsprechend den Linsen $L_{11}$ bis $L_{14}$ zugeordnet, umfasst. Die Spiegelflächen SF werden durch plane Flächen gebildet, die relativ zueinander gegen die Flächennormale N hin geknickt sind. Die durch die Flächen definierten Ebenen schneiden dabei die Ebene $E_2$ in zueinander schiefen Geraden, wie mit $G_1$, $G_2$, $G_3$ angedeutet.

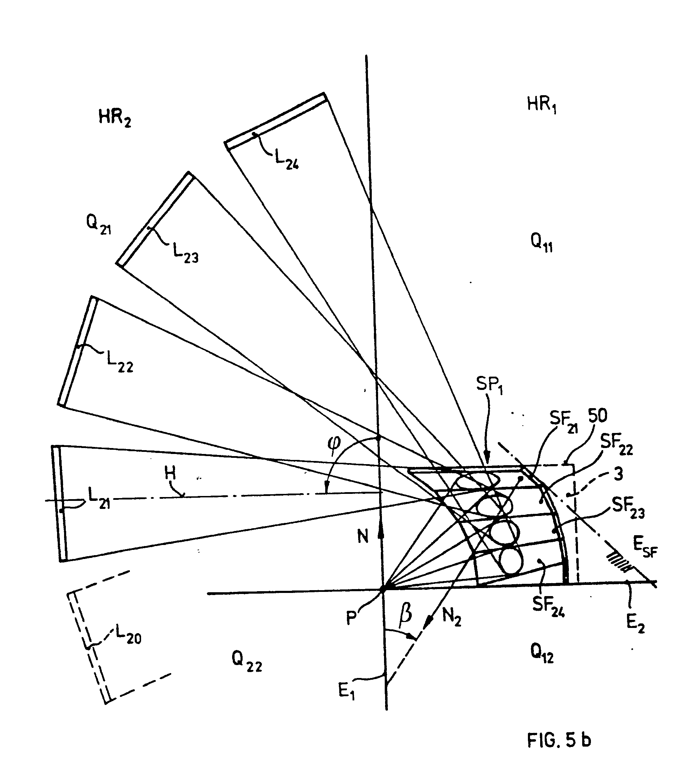

Wie in Fig. 5b gestrichelt angedeutet, kann diese Ausformung auch durch entsprechende Formgebung eines Körpers 50 realisiert werden. Die durch die Linse $L_{21}$ mit Bezug auf die Flächennormale N unter grösstem Winkel einfallenden Strahlen, wie dargestellt, von z.B. 90°, werden gebündelt und auf das Flächenelement $SF_{21}$ des Spiegelelementen $SP_1$ geworfen, dessen eigene Flächennormale $N_2$ gemäss Fig. 2b, verglichen mit den entsprechenden Flächennormalen (nicht eingezeichnet) der anderen Spiegelflächen am selben Spiegelelement $SP_1$ mti Bezug auf die Flächennormale N, den kleinsten Winkel $\beta$ einschliesst. Entsprechendes gilt für die übrigen Strahlenbündel, der im einen wie im anderen Halbraum $HR_1$ resp. $HR_2$ angeordneten Sammellinse L. Dabei ist es auch möglich, wie in Fig. 5b gestrichelt eingetragen, mit einer entsprechend angeordneten Linse $L_{20}$ Strahlen, bei entsprechender Formgebung und Neigung einer hierfür vorgesehenen (nicht eingezeichneten) Spiegelfäche zu detektieren, die unter einem Winkel $\varphi$ von grösser als 90° bezüglich der Flächennormalen N eintreffen. Das Spiegelelement $SP_1$ ist mit Bezug auf die Projektionsebene $EP_2$ der zugeordneten Linsenhauptachsen $H_{21}$ bis $H_{24}$ derart geneigt, dass sich die Schnittgeraden, der durch die Spiegelflächen SF gebildeten Ebenen $E_{SF}$, in Fig. 5b eingetragen, mit der Schnittgeraden der Projektionsebene $EP_2$ mit der zweiten Ebene $E_2$ schiefwinklig schneiden. Damit wird eine Konzentration der an den entsprechenden Spiegelelementen $SP_1$, $SP_2$ reflektierten Strahlenbündel in einen punktsymmetrischen Flächenbereich um den Fusspunkt P der Flächennormalen N auf der Ebene $E_2$ erzielt.

Wie in Fig. 5a eingetragen, ist mindestens eine weitere Sammellinse $L_0$ vorgesehen, deren Hauptachse $H_0$ mit der Flächennormalen N zusammenfällt. Vorzugsweise werden jedoch mehrere Linsen zusätzlich so angeordnet, dass ihre Bündel-Hauptachsen unreflektiert, direkt auf die Ebene $E_2$ im Bereich des Normalenfusspunktes stossen.

In der gewählten Darstellung beeinträchtigt das Spiegelelement $SP_2$ den Strahlengang der Strahlen im selben Halbraum $HR_2$ nicht und ebensowenig das Spiegelelement $SP_1$ die Strahlen aus dem Halbraum $HR_1$. In gewissen Fällen ergibt sich jedoch, wie bereits anhand von Fig. 2a, 2b besprochen, aus Erfordernissen, wie kompaktest möglicher Bauweise, Brennweite der Linsen etc., eine Beeinträchtigung der Strahlengänge im Halbraum $HR_2$ durch das Spiegelelement $SP_2$ und entsprechend der Strahlengänge auf dem Halbraum $HR_1$ durch das Spiegelelement $SP_1$. Dies ist in Fig. 5a andeutungsweise durch den strichpunktierten Strahlenkegel 54 angedeutet. Ist dies der Fall, so wird das entsprechend den Strahlengang teilweise abdeckende Spiegelement, hier $SP_2$, wie strichpunktiert bei 56 angedeutet, entsprechend der Schnittfigur, die es mit dem Strahlengang bildet, ausgeformt.

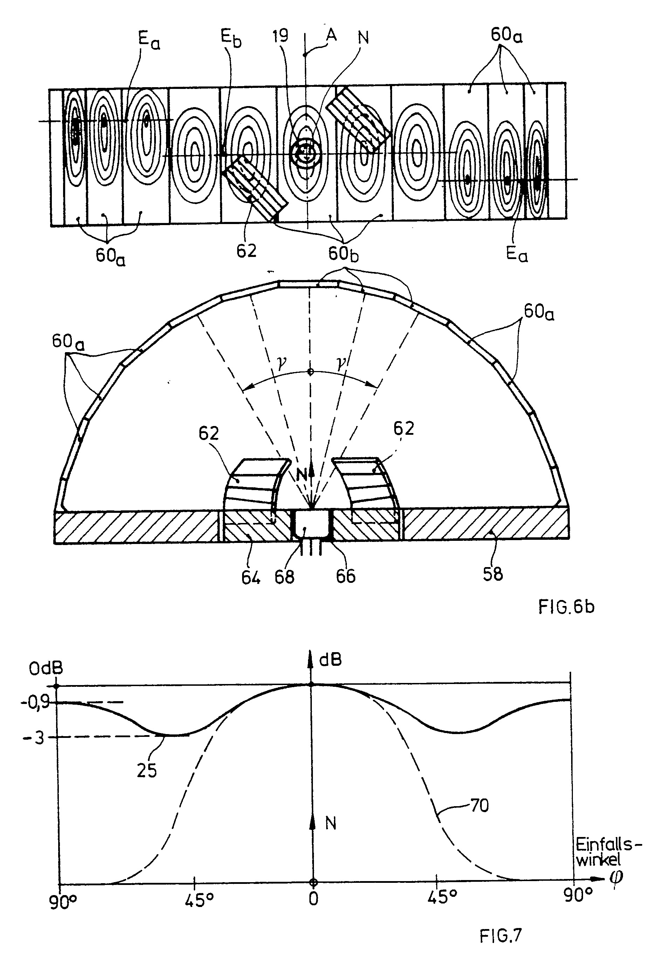

In den Fig. 6a und 6b ist eine Realisationsform der nun so realisierten und beschriebenen Weitwinkel-Sammeloptik dargestellt. Ueber einem Träger 58 ist eine Mehrzahl von Linsen $60_a$ und $60_b$ gewölbeartig angeordnet. Dabei handelt es sich vorzugsweise um rechteckige Kunststofflinsen. Die Brennpunkte der Linsen 60a, deren Bündel an den Spiegelelementen 62 reflektiert werden, sind, wie in Fig. 6a angedeutet, mit Bezug auf eine Achse A des Gewölbes beidseitig in Ebenen $E_a$ versetzt. Die Hauptachsen der Linsen $60_b$, deren Bündel direkt auf die Ebene $E_2$ gerichtet sind, liegen in der Ebene $E_b$ symmetrisch zwischen $E_a$. In der Ebene $E_b$ ist im Zentrumsbereich ein Detektor/Spiegel-Träger 64 in den Träger 58 eingelässen, der eine Zentrumsöffnung 66 für einen Detektor 68, wie einen Infrarotdetektor, aufweist. Am Detektor/Spiegel-Träger 64 sind Spiegelelemente 62 mit in beschriebener Art und Weise gegen die Flächennormale N hin konkav gebogenen resp. geknickten Spiegelflächen angeordnet. Da insbesondere die exakte geometrische Ausrichtung der Spiegelelemente 62 mit Bezug auf die Flächennormale N resp. den Zentrumsbereich eines vorzusebenden Detektors 68, allenfalls Senders von ausschlaggebender Bedeutung ist, wird, wie ersichtlich, vorzugsweise der Detektor 68 und die Spiegel 62 im selben Trägerelement 64 angebracht. Der Linsenträger resp. Sockel 58 ist dabei vorzugsweise ebenfalls aus Kunststoff gefertigt.

Auch die Spiegel 62 mit dem Detektor/Spiegel-Träger 64 können ebenfalls einteilig aus Kunststoff gefertigt sein.

In Fig. 7 ist eine Empfangs-Charakteristik 70 eines Detektors, beispielsweise eines Infrarotdetektors 68 gemäss Fig. 6a, dargestellt. Wie daraus ersichtlich und allgemein bekannt, ist seine Empfindlichkeit auf Strahlen, die bezüglich seiner Zentralachse N unter dem Nullwinkel einfallen, maximal, beispielsweise entsprechend 0dB. Mit zunehmendem Einfallswinkel $\varphi$, insbesondere bei Winkeln grösser als 45°, nimmt sie rasch ab. Mit der Kurve 72 ist die Empfindlichkeit dargestellt, die mit einem Detektor mit der Empfangs-Charakteristik entsprechend der Kurve 70, jedoch mit Vorsehen der erfindungsgemässen Weitwinkel-Sammeloptik erzielt wurde. Ueber den gesamten Winkelbereich von $\varphi \leqslant 90°$, werden mit Bezug auf die Maximalempfindlichkeit des Detektors entsprechend 0dB, Minimalstellen mit lediglich etwa $-3dB$ Abfall bei ca. $\varphi \cong 45°$ erzielt, die Winkelrandgebiete bei ca. $\varphi \cong 90°$ weisen jedoch lediglich Dämpfungen entsprechend ca. $-1dB$ auf. Dies zeigt, dass mit der erfindungsgemässen Anordnung ausserordentlich gute Resultate erzielt werden, die es ermöglichen, mit einem einzigen Detektor mit relativ schmaler Empfangs-Charakteristik, weitwinklig ganze Räume zu überwachen, wie zum Aufschalten einer Raumbeleuchtung und zur Aufrechterhaltung der Beleuchtung, solange sich jemand im Raum aufhält. Dabei muss im weiteren betont werden, dass üblicherweise derartige Detektoren nicht durch stätische Strahlungsintensitätswerte angesteuert werden, sondern durch Wechsel der Strahlungsintensität, wie als bei Eintritt und Austritt von Infratorquellen in überwachte Achsen erfolgen. Es wurde gefunden, dass dadurch, dass eine diskrete, relativ scharfe Zuordnung von Linsen und Spiegelflächen realisiert wird, dieses Prinzip aufrechterhalten werden kann, indem schon bei geringsten Bewegungen einer Quelle, Wechsel aus dem einen Linsenbereich in den anderen erfolgen, was genügt, ausgangsseitig eines als optoelektrischer Wandler ausgebildeten Detektors 68 durch Impulsauswertung die Aussage zu gewinnen, ob eine Strahlungsquelle immer noch anwesend ist oder nicht.

**Patentansprüche**

1. Optisches Bauelement zur Umlenkung optischer Strahlen auf ein Sensorflächenelement in einer Ebene (E2), bei dem um das Flächenelement eine bezüglich seiner Normalen symmetrische Anordnung geneigt aufragender Spiegel vorgesehen ist, deren obere Berandung eine Eintrittsöffnung für die Strahlen bildet, durch die einfallende Strahlen nach Einfachreflexion an der Spiegelanordnung in einem Winkel zur Normalen auf das der Eintrittsöffnung zugekehrte Flächenelement auftreffen, der kleiner ist als ihr diesbezüglicher Winkel beim Eindringen in die Eintrittsöffnung, dadurch gekennzeichnet, dass zur Umlenkung optischer Strahlen im wesentlichen aus bezüglich der Normalen entgegengesetzten, vorgegebenen Richtungen, die Spiegelanordnung durch nur zwei sich bezüglich der Normalen gegenüberliegende Spiegel (1, 2) gebildet ist, die mit Ebenen parallel zur einen Ebene (E2) gerade Schnittlinien bilden und dass im direkten Strahlengang im Raum zwischen der Eintrittsöffnung und dem Sensorflächenelement keine von den Strahlen durchsetzte Bauelemente vorgesehen sind.

2. Optisches Bauelement nach Anspruch 1, dadurch gekennzeichnet, dass die Spiegel (1, 2) plan sind.

3. Optisches Bauelement nach Anspruch 2, dadurch gekennzeichnet, dass die Spiegelebenen die eine Ebene ($E_2$) in mindestens nahezu parallelen Geraden schneiden.

4. Optisches Bauelement nach Anspruch 1, dadurch gekennzeichnet, dass jedem der Spiegel (1, 2) mindestens eine Sammellinse (3, 5) zugeordnet ist.

5. Optisches Bauelement nach Anspruch 4, dadurch gekennzeichnet, dass die Linsenhauptachsen ($H_3$, $H_5$) windschief oder rechtwinklig zur dazwischenliegenden Normalen (N) verlaufen.

6. Optisches Bauelement nach einem der Ansprüche 4 oder 5, dadurch gekennzeichnet, dass die Projektionen der Hauptachsen ($H_3$, $H_5$) der Linsen (3, 5) auf die eine Ebene ($E_2$) sowie die Schnittkurven der Spiegelflächen mit dieser Ebene ($E_2$) um den Fusspunkt der Normalen auf dieser Ebene ($E_2$) eine dazu symmetrische Figur, vorzugsweise ein Viereck, vorrugsweise dabei ein Parallelogramm aufspannen.

7. Optisches Bauelement nach einem der Ansprüche 4 bis 6, dadurch gekennzeichnet, dass jeder der Spiegel (1, 2), mindestens angenähert, entsprechend der Schnittkurve seiner Fläche mit dem von der dem anderen Spiegel zugeordneten Linse (3, 5) gebildeten Strahlenbündel ($K_3$, $K_5$) ausgespart (9) und/oder nicht grösser als die Schnittfläche seiner eigenen Fläche mit dem Strahlenbündel der ihm zugeordneten Linse ist.

8. Optisches Bauelement nach einem der Ansprüche 4 bis 7, dadurch gekennzeichnet, dass eine weitere Sammellinse (29) vorgesehen ist, deren Hauptachse mindestens nahezu mit der Normalen (N) zusammenfällt.

9. Optisches Bauelement nach Anspruch 1, dadurch gekennzeichnet, dass die Spiegel (1, 2; $SP_1$, $SP_2$; 62) an einem die Normale (N) festlegenden Halter (11, 64) angeordnet sind.

10. Optisches Bauelement nach Anspruch 9, dadurch gekennzeichnet, dass Spiegel und Halter einteilig ausgebildet sind.

11. Optisches Bauelement nach einem der Ansprüche 9 oder 10, dadurch gekennzeichnet, dass der Halter (11, 64) in seinem durch die Normale (N) festgelegten Zentrumsbereich für die Aufnahme eines optischen Sensors oder Senders (68) aufgebildet ist, wie für einen optoelektrischen Wandler.

12. Optisches Bauelement nach einem der Ansprüche 4 bis 8, dadurch gekennzeichnet, dass ein, mindestens angenähert tunnelförmiger Linsenträger (25, 35) vorgesehen ist, an dessen Peripherie die Linsen angeordnet sind, wobei die Hauptachsen der den Spiegeln zugeordneten Linsen in Richtung der Tunnelachse achsial versetzt sind, vorzugsweise symmetrisch zur Normalen und vorzugsweise radial ausgerichtet sind.

13. Optisches Bauelement nach den Ansprüchen 9 und 12, dadurch gekennzeichnet, dass der Linsenträger in einer Grundfläche eine Positionier- und Halteanordnung für den Halter aufweist.

14. Optisches Bauelement nach einem der Ansprüche 1, 3 bis 13, dadurch gekennzeichnet, dass jeder Spiegel ($SP_1$, $SP_2$; 62) eine gegen die Normale hin konkav geknickte oder gebogene Schnittkurve, mit einer weiteren Ebene, die die Flächennormale (N) enthält, definiert zur Bildung gegebenenfalls sammellinsen-zugeordneter Spiegelteilflächen resp. Strahlen-Einfallsrichtung zugeordneter Spiegelteilflächen.

15. Optisches Bauelement nach Anspruch 14, dadurch gekennzeichnet, dass die Spiegelteilflächen ($SF_{11}$—$SF_{14}$; $SF_{21}$—$SF_{24}$) das jeweils zugeordnete Bündel derart schneiden, dass sich die Projektionen der entsprechenden Bündelhauptachsen ($H_{21}$—$H_{24}$; $H_{11}$—$H_{14}$) auf die eine Ebene ($E_2$) einerseits und die jeweiligen Schnittgeraden ($G_1$—$G_3$) der durch die Spiegelteilflächen definierten Ebenen mit der einen Ebene ($E_2$) anderseits, schief schneiden.

16. Optisches Bauelement nach Anspruch 14, dadurch gekennzeichnet, dass den Spiegelteilflächen je Sammellinsen ($L_{11}$—$L_{14}$; $L_{21}$—$L_{24}$) zugeordnet sind, und dass die Hauptachsen ($H_{11}$—$H_{14}$, $H_{21}$—$H_{24}$) der Sammellinsen ($L_{11}$—$L_{14}$; $L_{21}$—$L_{24}$) die einem Spiegel zugeordnet sind, in derselben Projektionsebene ($E_a$) auf die eine Ebene ($E_2$) liegen, wobei vorzugsweise diese Projektionsebenen ($E_a$) parallel, vorzugsweise symmetrisch bezüglich der Normalen (N) angeordnet sind.

17. Optisches Bauelement nach einem der Ansprüche 14 bis 16, dadurch gekennzeichnet, dass jeder Spiegel mindestens zwei relativ zueinander angewinkelte, vorzugsweise plane Spiegelteilflächen umfasst.

18. Optisches Bauelement nach einem der Ansprüche 14 bis 17, dadurch gekennzeichnet, dass diegenigen Hauptachsen der Strahlenbündel mit bezüglich der Normalen grösserem Winkel auf Spiegelteilflächen gerichtet sind, deren eigene Flächennormale bezüglich der Normalen einen kleineren Winkel einschliesst.

19. Optisches Bauelement nach Anspruch 17, dadurch gekennzeichnet, dass sich durch plane Spiegelteilflächen festgelegte Ebenen mit der Ebene in zueinander schiefen Geraden ($G_1$, $G_2$, $G_3$) schneiden.

20. Optisches Bauelement nach Anspruch 14, dadurch gekennzeichnet, dass mindestens eine Sammellinse, vorzugsweise mehrere, vorgesehen ist resp, werden, deren Hauptachse (n) direkt auf den Flächenbereich um den Fusspunkt der Normalen auf der einen Ebene gerichtet ist resp. sind.

21. Optisches Bauelement nach einem der Ansprüche 1 bis 20, dadurch gekennzeichnet, dass Sammellinsen, vorzugsweise aus Kunststoff, gewölbeförmig angeordnet, vorgesehen sind.

22. Optisches Bauelement nach einem der Ansprüche 1 bis 21, dadurch gekennzeichnet, dass Sammellinsen auf einem Träger angeordnet sind, worin eine Positionierungsanordnung für die Spiegel und für ein Detektor- oder Senderelement vorgesehen ist.

23. Verwendung des Bauelementes nach einem der Ansprüche 1 bis 22 mit einem Passiv-Infrarotdetektor.

24. Verwendung nach Anspruch 23 als Raumbeleuchtungs-Steuermodul.

25. Verwendung des Bauelementes nach einem der Ansprüche 1 bis 22 zur Weitwinkelvergrösserung einer relativ schmalwinkligen Empfangs-Charakteristik eines vorgesehenen optoelektrischen Wandlers bis zu mindestens ±90° bezüglich der Empfangs-Charakteristik-Zentralachse des optoelektrischen Wandlers.

## Revendications

1. Composant optique pour dévier des rayons optiques sur un élément de surface de capteur situé dans un premier plan (E2), composant dans lequel, autour de l'élément de surface, sont prévus des miroirs dressés sous une certaine inclinaison selon un agencement d'ensemble symétrique par rapport à la normale à l'élément de surface et dont le bord supérieur forme, pour les rayons, une ouverture d'entrée par laquelle des rayons incidents, après réflexion simple sur l'agencement de miroire, tombent sur l'élément de surface tourné vers l'ouverture d'entrée en formant avec ladite normale un angle, qui est inférieur à leur angle correspondant lors de leur pénétration dans l'ouverture d'entrée, caractérisé en ce que, pour dévier des rayons optiques provenant essentiellement de directions prescrites, opposées par rapport à la normale, l'agencement de miroirs est forme simplement de deux miroirs (1, 2) qui sont situés l'un en face de l'autre par rapport à la normule et qui forment des lignes d'intersection droites avec des plans parallèles au premier plan (E2), et en ce que, sur le trajet direct des rayons dans l'espace existant entre l'ouverture d'entrée et l'élément de surface du capteur, il n'est prévu aucun composant traversé par les rayons.

2. Composant optique selon la revendication 1, caractérisé en ce que les miroirs (1, 2) sont plans.

3. Composant optique selon la revendication 2, caractérisé en ce que les plans des miroirs coupent le premier plan (E2) selon des droites au moins approximativement parallèles.

4. Composant optique selon la revendication 1, caractérisé en ce qu'à chacun des miroirs (1, 2), est associée au moins une lentille convergents (3, 5).

5. Composant optique selon la revendication 4, caractérisé en ce que les axes principaux (H3, H5) des lentilles sont dirigés obliquement par rapport à la normale (N) située entre eux ou perpendiculairement à celle-ci.

6. Composant optique selon l'une des revendications 4 ou 5, caractérisé en ce que les projections des axes principaux (H3, H5) des lentilles (3, 5) sur le premier plan (E2), ainsi que les courbes d'intersection des surfaces des miroirs avec ce plan (E2), autour du pied de la normale sur ce plan (E2), sous-tendent une figure symétrique par rapport à ce pied, de préférence un quadrilatère, de préférence ici un parallèlogramme.

7. Composant optique selon l'une des revendications 4 à 6, caractérisé en ce que chacun des miroirs (1, 2) est évidé (9), au moins approximativement, en correspondance avec la courbe l'intersection de sa surface avec le faisceau de rayons (K3, K5) formé par la lentille (3, 5) associée à l'autre miroir et/ou n'est pas plus grand que la surface d'intersection de sa propre surface avec le faisceau de rayons de la lentille qui lui est associée.

8. Composant optique selon l'une des revendications 4 à 7, caractérisé en ce qu'il est prévu une autre lentille convergente (29) dont l'axe principal coïncide, au moins approximativement, avec la normale (N).

9. Composant optique selon la revendication 1, caractérisé en ce que les miroirs (1, 2; SP1, SP2; 62) sont disposés sur un support (11, 64) qui détermine la normale (N).

10. Composant optique selon la revendication 9, caractérisé en ce que le miroir et le support sont conçus d'une seule pièce.

11. Composant optique selon l'une des revendications 9 ou 10, caractérisé en ce que le support (11, 64) est conçu, dans sa zone centrale, déterminée par la normale (N), pour recevoir un capteur optique ou un émetteur (68) par exemple un transducteur optoélectrique.

12. Composant optique selon l'une des revendications 4 à 8 caractérisé en ce qu'il est prévu un porte-lentilles (25, 35), au moins approximativement en forme de tunnel, à la périphérie duquel sont disposées les lentilles, étant précisé que les axes principaux des lentilles associées aux miroirs sont décalés axialement dans la direction de l'axe du tunnel, de préférence symétriquement par rapport à la normale, et sont orientés de préférence radialement.

13. Composant optique selon les revendications 9 et 12 caractérisé en ce que le porte-lentilles présente, sur une surface de base, un dispositif de positionnement et de maintien pour le support.

14. Composant optique selon l'une des revendications 1, 3 à 13, caractérisé en ce que chaque miroir (SP1, SP2; 62) définit une courbe d'intersection brisée ou cintrée, concave en direction de la normale, avec un autre plan qui contient ladite normale (N), pour former des surfaces réfléchissantes partielles associées éventuellement aux lentilles convergents, respectivement des surfaces réfléchissantes partielles correspondant à la direction d'incidence des rayons.

15. Composant optique selon la revendication 14, caractérisé en ce que les surfaces réfléchissantes partielles (SF11—SF14; SF21—SF24) coupent le faisceau qui leur esp respectivement associé de façon telle que les projections aus axes principaux (H21—H24; H11—H14) des faisceaux correspondants sur le premier plan (E2), d'une part, et les droites d'intersection respectives (G1—G3) des plans définis par les surfaces réfléchissantes partielles avec le premier plan (E2), d'autre part, se coupent obliquement.

16. Composant optique selon la revendication 14, caractérisé en ce qu'aux surfaces réfléchissantes partielles sont associées respectivement des lentilles convergentes (L11—L14; L21—L24), et en ce que les axes principaux (H11—H14; H21—H24) des lentilles convergentes (L11—L14; L21—L24) qui sont associées à un miroir sont situés dans le même plan (Ea) de projection sur le premier plan (E₂), étant précisé que de préférence ces plans de projection (E_a) sont disposés parallèlement entre eux, de préférence symétriquement par rapport à la normale (N).

17. Composant optique selon l'une des revendications 14 à 16, caractérisé en ce que chaque miror comporte au moins deux surfaces réfléchissantes partielles, de préférence planes, formant un angle l'une par rapport à l'autre.

18. Composant optique selon l'une des revendications 14 à 17, caractérisé en ce que ce sont les axes principaux aus faisceaux de rayons présentant le plus grand angle par rapport à la normale (N) qui sont dirigés sur les surfaces réfléchissantes partielles dont la propre normale fait un plus petit angle par rapport à la normale (N).

19. Composant optique selon la revendication 17, caractérisé en ce que les plans déterminés par les surfaces réfléchissantes partielles planes coupent le premier plan suivant des droites $(G_1, G_2, G_3)$ obliques l'une par rapport à l'autre.

20. Composant optique selon la revendication 14, caractérisé en ce qu'il est prévu au moins une lentille convergente, de préférence plusieurs, dont l'axe principal, ou les axes principaux, est ou sont directement dirigé(s) sur la zone de surface située autour du pied de la normale sur le premier plan.

21. Composant optique selon l'une des revendications 1 à 20, caractérisé en ce que des lentilles convergentes, de préférence en matière plastique, disposées en voûte, sont prévues.

22. Composant optique selon l'une des revendications 1 à 21, caractérisé en ce que des lentilles convergentes sont disposées sur un support sur lequel est prévu un dispositif de positionnement pour les miroirs et pour un organe capteur ou un organe émetteur.

23. Utilisation d'un composant selon l'une des revendications 1 à 22 avec un capteur à infrarouge passif.

24. Utilisation selon la revendication 23 sous forme de module de commande de l'éclairage d'un espace.

25. Utilisation du composant selon l'une des revendications 1 à 22 pour élargir l'angle d'une caractéristique de réception, d'angle relativement faible, d'un transducteur optoélectrique prévu, jusqu'à au moins ±90° par rapport à l'axe central de la caractéristique de réception du transducteur optoélectrique.

**Claims**

1. Optical device for deflecting optical rays onto a sensor surface element in a plane (E2), in which an arrangement of inclined, upwardly projecting mirrors which is symmetrical relative to the normal on the surface element is provided around the surface element, the upper boundaries of which mirrors form an entry opening for the rays, through which incident rays strike the surface element facing the entry opening after single reflection on the mirror arrangement at an angle to the normal which is smaller than its angle relating thereto upon penetration into the entry opening, characterised in that for the deflection of optical rays substantially from given opposite directions with respect to the normal, the mirror arrangement is formed by only two mirrors (1, 2) located opposite each other relative to the normal, which form straight intersection lines with planes parallel to said one plane (E2), and that no devices thorough which the rays pass are provided in the direct ray path in the space between the entry opening and the sensor surface element.

2. Optical device according to Claim 1, characterised in that the mirrors (1, 2) are planar.

3. Optical device according to Claim 2, characterised in that the mirror planes intersect said one plane (E2) in at least approximately parallel straight lines.

4. Optical device according to Claim 1, characterised in that at least one collector lens (3, 5) is allocated to each of the mirrors (1, 2).

5. Optical device according to Claim 4, characterised in that the principal axes $(H_3, H_5)$ of the lenses run skew or at right-angles to the normal (N) located therebetween.

6. Optical device according to one of Claims 4 or 5, characterised in that the projections of the principal axes $(H_3, H_5)$ of the lenses (3, 5) onto said one plane $(E_2)$ and the curves of intersection of the mirror surfaces with this plane $(E_2)$ define about the foot of the normal on this plane $(E_2)$ a figure which is symmetrical thereto, preferably a rectangle, and preferably a parallelogram.

7. Optical device according to one of Claims 4 to 6, characterised in that each of the mirrors (1, 2), at least approximately, is recessed (9) corresponding to the curve of intersection of its surface with the bundle of rays $(K_3, K_5)$ formed by the lens (3, 5) allocated to the other mirror and/or is not greater than the plane of section of its own surface with the bundle of rays of the lens allocated thereto.

8. Optical device according to one of Claims 4 to 7, characterised in that a further collector lens (29) is provided, the principal axis of which at least almost coincides with the normal (N).

9. Optical device according to Claim 1, characterised in that the mirrors $(1, 2; SP_1, SP_2; 62)$ are arranged on a holder (11, 64) which defines the normal (N).

10. Optical device according to Claim 9, characterised in that the mirrors and the holder are of one piece.

11. Optical device according to one of Claims 9 or 10, characterised in that the holder (11, 64) in its centre region defined by the normal (N) is designed for receiving an optical sensor or emitter (68), such as an optical-electric converter.

12. Optical device according to one of Claims 4 to 8, characterised in that one at least approximately tunnel-shaped lens support (25, 35) is provided, on the periphery of which the lenses are arranged, with the principal axes of the lenses allocated to the mirrors being axially displaced in the direction of the tunnel axis, preferably symmetrically to the normal and preferably radially directed.

13. Optical device according to Claims 9 and 12, characterised in that the lens support has a positioning and holding arrangement for the holder in a base surface.

14. Optical device according to one of Claims 1, 3 to 13, characterised in that each mirror ($SP_1$, $SP_2$; 62) defines a curve of intersection with another plane which contains the surface normal (N) which is bent or curved concavely towards the normal to form possibly partial mirror surfaces allocated to the collector lenses or partial mirror surfaces allocated to the direction of incidence of the rays.

15. Optical device according to Claim 14, characterised in that the partial mirror surfaces ($SF_{11}$—$SF_{14}$; $SF_{21}$—$SF_{24}$) intersect the respectively allocated bundle in such a manner that the projections of the corresponding principal bundle axes ($H_{21}$—$H_{24}$; $H_{11}$—$H_{14}$) on said one plane ($E_2$) on one hand and the respective straight intersection lines ($G_1$—$G_3$) of the planes defined by the partial mirror surfaces with said one plane ($E_2$) on the other hand intersect at an oblique angle.

16. Optical device according to Claim 14, characterised in that to each of the partial mirror surfaces are allocated collector lenses ($L_{11}$—$L_{14}$; $L_{21}$—$L_{24}$), and that the principal axes ($H_{11}$—$H_{14}$; $H_{21}$—$H_{24}$) of the collector lenses ($L_{11}$—$L_{14}$; $L_{21}$—$L_{24}$) which are allocated to one mirror lie in the same projection plane ($E_a$) on to said one plane ($E_2$), with these projection planes ($E_a$) preferably being arranged parallel to each other, preferably symmetrically to the normal (N).

17. Optical device according to one of Claims 14 to 16, characterised in that each mirror comprises at least two preferably planar partial mirror surfaces angled relative to each other.

18. Optical device according to one of Claims 14 to 17, characterised in that those principal axes of the bundles of rays having an angle which is greater relative to the normal are directed at partial mirror surfaces, the own surface normal of which encloses a smaller angle relative to the normal.

19. Optical device according to Claim 17, characterised in that planes determined by planar partial mirror surfaces intersect with the said one plane in straight lines ($G_1$, $G_2$, $G_3$) which are at an oblique angle to each other.

20. Optical device according to Claim 14, characterised in that at least one collector lens, preferably several, is or are provided, the principal axis or axes (n) of which is or are directed directly onto the surface region about the foot of the normal on said one plane.

21. Optical device according to one of Claims 1 to 20, characterised in that collector lenses, preferably of plastics material, arranged in an arch, are provided.

22. Optical device according to one of Claims 1 to 21, characterised in that collector lenses are arranged on a support, wherein a positioning arrangement for the mirrors and for a detector or emitter element is provided.

23. Use of the device according to one of Claims 1 to 22 with a passive infra-red detector.

24. Use according to Claim 23 as a room lighting control module.

25. Use of the device according to one of Claims 1 to 22 for the wide-angled enlargement of up to ±90° of a relatively narrow-angled reception characteristic of an optical-electric converter which is provided, relative to the reception characteristic central axis of the optical-electric converter.

FIG. 1a

FIG.1b

FIG. 2a

FIG. 2b

2

FIG.3a

FIG.3b

FIG.4a

FIG.4b

4

FIG. 5 a

FIG. 5 b

FIG.6b

FIG.7